# EUROPEAN PATENT SPECIFICATION

(11) **EP 4 125 444 B1**
(45) Date of publication and mention of the grant of the patent: **25.12.2024**
(21) Application number: 21714975.6
(22) Date of filing: 27.03.2021
(51) Int. Cl.: A23N 4/14, A23N 4/24

(54) **PEAR PROCESSING METHOD AND MULTILANE APPARATUS**
BIRNENVERARBEITUNGSVERFAHREN UND MEHRSPURIGE VORRICHTUNG
PROCÉDÉ DE TRANSFORMATION DE POIRES ET APPAREIL MULTIVOIE

(30) Priority: 30.03.2020 IT 202000006667
(43) Date of publication of application: 08.02.2023
(73) Proprietor: Crescenzo, Biagio, 84125 Salerno (SA) (IT)
(72) Inventor: Crescenzo, Biagio, 84125 Salerno (SA) (IT)
(74) Representative: Studio Torta S.p.A.
(86) International application number: PCT/IB2021/052552
(87) International publication number: WO 2021/198867

(56) References cited:
- CA-A- 767 953
- US-A- 2 664 129
- US-A- 2 901 014

## Description

### Technical Field

The present invention relates to a pear processing method and multilane apparatus.

### Background Art

CA 767953 A, and US 3,246,676 of the same family, disclose a pear processing apparatus having means for controlling the depth of the endocarp in a pear, means for supporting a knife for moving the knife in and out of a pear to be cored, means for adjusting the displacement of the knife according to the size of the fruit to be cored. The means for controlling the depth of the endocarp are of the mechanical type, which require the control means to contact the pear to be cored. Since the fruits have different sizes, their endocarp, or cell that encloses the seeds, also has depths from the surface of the fruit that vary according to the size of the same. Also disclosed is depth control means adjacent to the knife and engageable with the surface of the fruit when the knife is in the fruit and means sensitive to the movement of the knife towards the fruit to automatically adjust the depth control means during the movement of the knife into a coring position so as to vary the distance of the depth control means from the end of the knife according to the size of the fruit to be cored in order to control the depth of entry of the knife into the fruit. The depth control means is a mechanical means that moves the knife into the coring position and operates by resting on the fruit to be cored.

WO/2018/234908 describes a method of recognizing the orientation of a fruit having a central axis of symmetry passing through the concave parts of the fruit, i.e. its peduncle cavity and its calycine cavity. The fruit advances on a multilane belt, formed by mesh elements and fruit holding flights having a plurality of recesses. Each recess is equipped with a central opening showing the fruit contained within it. The method comprises an individual measurement step of each fruit to be treated advancing on the fruit bearing multilane belt, by means of a distance meter, preferably a laser meter to evaluate whether the distance measured in a measurement step of each individual fruit is that of a concave part of the fruit or that of a convex part of the same. The purpose of the invention described in the aforementioned international patent application is to establish whether the fruit is correctly oriented with its central axis of symmetry in a vertical position.

US 3,373,786 discloses a machine for processing apples or the like having:
- a combination of means defining a pocket with an aperture therein, and supporting an apple with a removed stem;
- a vertically movable carrier disposed above said pocket;
- a coring unit carried by said carrier;
- a continuously rotating cutter on said coring unit, rotating about an axis concentric with the axis of said aperture, said cutter having a cutting edge movable in a cylindrical path;
- means for swinging said cutter from a retracted position wherein said cutting edge moves in a cylindrical path, having a diameter slightly less than that of said cylindrical stem cavity to an extended position, wherein said cutting edge moves in a cylindrical path having a diameter in excess of the diameter of the stem cavity to sever the seed cell from the apple.
Each revolving knife of the coring unit is equipped with its own actuator to determine its rotation movement.

US 3,199,558 discloses a fruit stemming, coring and splitting machine. The machine includes a conveyor multilane belt equipped with fruit holding flights. Each flight includes a row of fruit support and orientation cups. Each cup has a pair of fixed front and rear walls and a pair of movable jaw walls. The movable jaw walls are mounted opposite each other for a unitary rotation movement about a rotation pin to lock or release a fruit. Mounted on the carrier support is a movable pneumatic piston in engagement with one of the front and rear walls to move the front and rear walls into the fruit locking position. In fact, the jaw walls are engaged with each other with toothed sector portions provided in front on one side and in the other towards the inside with respect to the rotation pins. The movable jaw walls are not kept blocked by a mechanism that guarantees during the coring and pitting and halving operations the effective locking of the fruit in the support and orientation cup.

### Summary of Invention

The present invention aims to obviate the aforementioned drawbacks, encountered in the known art.

An object of the present invention is to determine the position of the endocarp, or seed cell, of a pear for the purpose of subsequent coring and pitting without using complex and expensive mechanical means.

Another purpose of the invention is to reduce the component parts in a cutting station.

Still another object of the present invention is to improve the belt conveyor with particular regard to the support and orientation cups for pears whose jaw walls are closed against each other during the coring, pitting and splitting operation to obtain an effective locking of the fruit in the support and orientation cup.

A further object of the present invention is to limit as much as possible the waste of raw material in fruit processing, in particular during the removal of the core.

Yet another object of the invention is to provide apparatus that is modular in order to change the number of its processing lanes according to needs.

In a first aspect of the invention, there is provided a method for processing pears having an endocarp located at a distance from the calycine end depending on the pear longitudinal size, the pears advancing in an apparatus controlled by a control unit on a multilane belt comprising mesh elements and fruit holding flights having a plurality of housing and centering cups in each of which a pear is positioned with its calycine end facing upwards, in order to be cored, pitted and halved, the method comprising:
- in a first step of advancing the multilane belt, locking each pear against rotation inside its housing and centering cup, and measuring the distance of the calycine end to know the pear longitudinal size; and
- in a second step of advancing the multilane belt, simultaneously lowering, by the control unit, a coring rod and a pitting knife from a rest position to the height of the endocarp of the underlying pear, as determined by the control unit, each pitting knife being rotated simultaneously with the other pitting knives at different heights according to the longitudinal size of the pear to be pitted,
method wherein the distance of the calycine end of each pear is measured without contact, and is communicated to the control unit which determines the height position of the endocarp of that pear.

In a second aspect of the invention there is provided a multilane apparatus for processing pears that carries out the above defined method.

It is known that each pear has an endocarp, or seed cell, located at a distance from its calycine end depending on the longitudinal dimension of the pear, that is, on its size. According to the invention, the longitudinal measurement of a pear positioned in a centering and supporting cup of the fruit holding flight with its calycine end facing upwards by means of a contactless distance measurer determines the height position of the endocarp: once the cutting depth has been established, the pear can be cored, pitted and halved, with minimal waste of raw material. Preferably, the longitudinal measurement is performed by means of laser distance sensors which are not invasive towards the pear to be measured and do not need additional transducers to communicate the measurement of the calycine end, and therefore of the endocarp, to the control unit which controls the lowering of the pitting knife of the relative substation.

Unlike the known art, the depth control means are not mechanical means which move the knife into the pitting position and operate by resting on the fruit to be cored.

### Brief Description of Drawings

Further features and advantages of the present invention will become most clear from the indicative, and therefore non-limiting, description of the multi-lane apparatus for processing pears, as illustrated in the accompanying drawings in which:
[Fig.1]

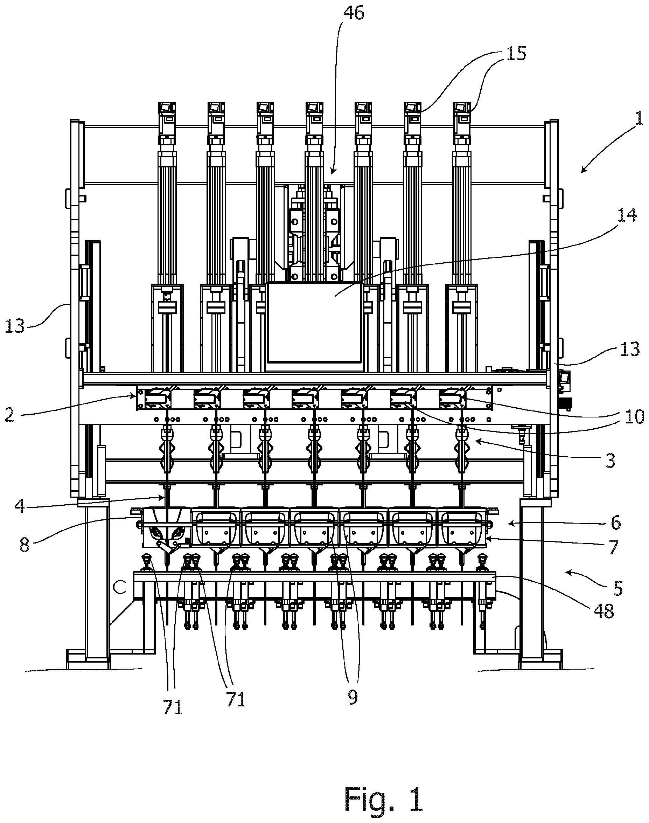

   [Fig.1] is a cross-section view showing a cutting station of the apparatus from the side of the pear advancement;
[Fig.2]

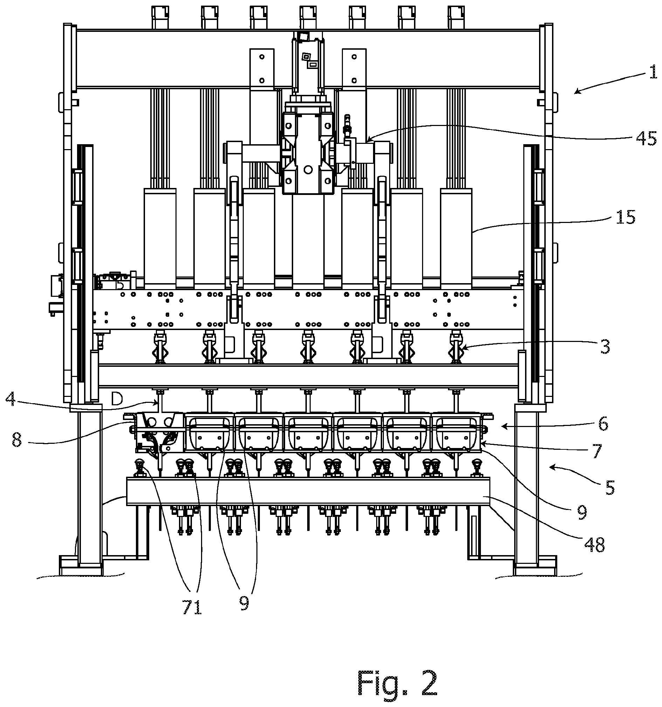

   [Fig.2] is a cross-section view showing the cutting station in [Fig.1] from the rear, seen from the opposite side;
[Fig.3]

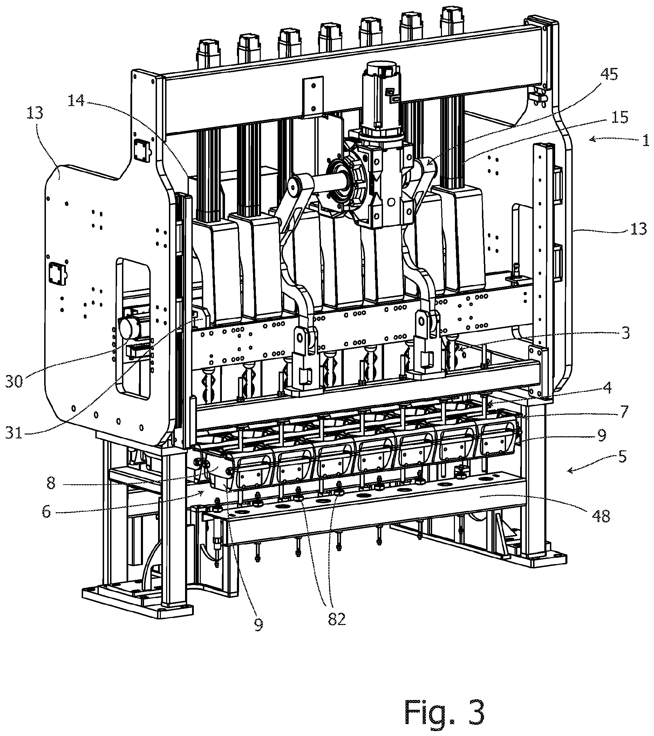

   [Fig.3] is a perspective view of the cutting station in [Fig.2];
[Fig.4]

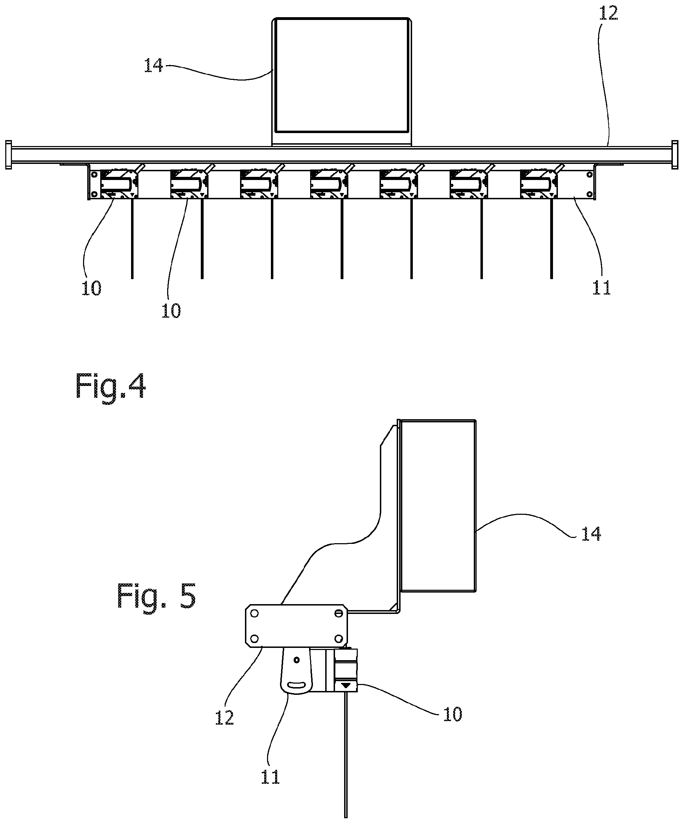

   [Fig.4] is a cross-section view taken from the front of a metering substation in the cutting station in [Fig.1] from the side of the pear feeding;
[Fig.5]
   [Fig.5] is a side view of the metering substation in [Fig.4];
[Fig.6]

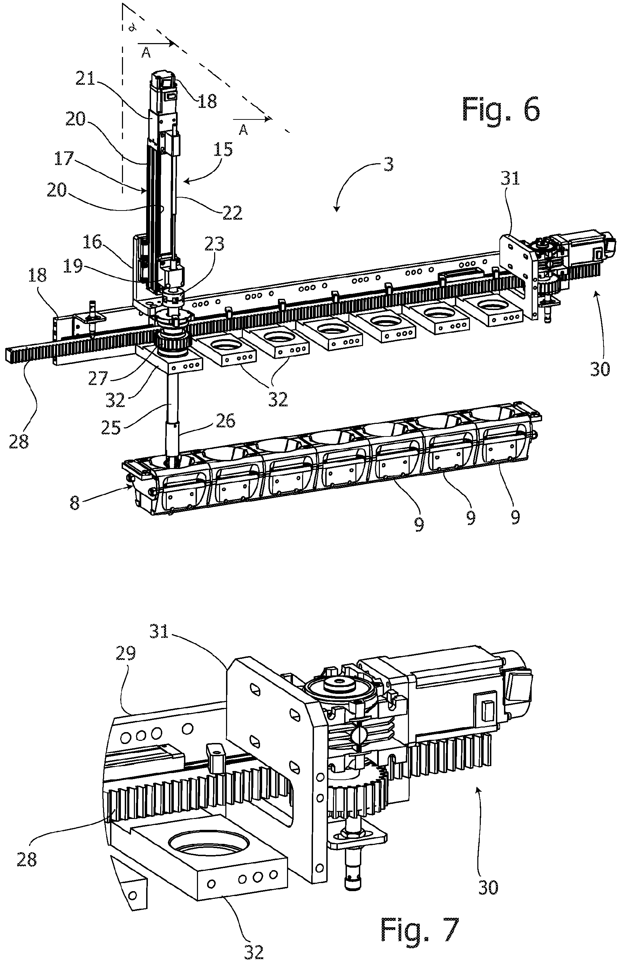

   [Fig.6] is a partial perspective view from the front and from the top of a coring and pitting substation of the cutting station, limited to a single pitting knife;
[Fig.7]
   [Fig.7] is an enlarged detail in [Fig.6];
[Fig.8]

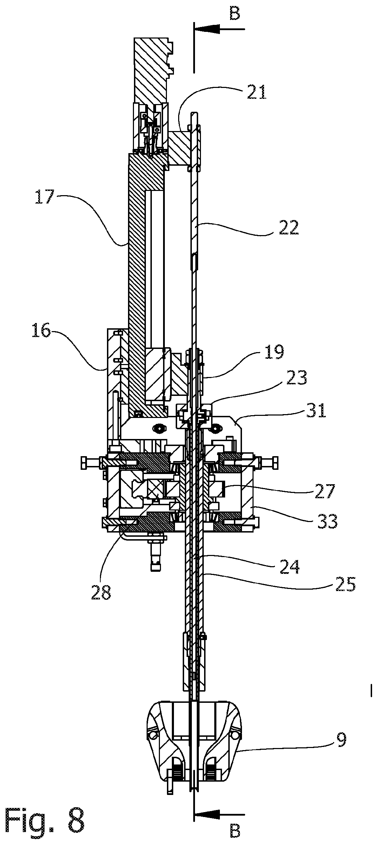

   [Fig.8] is a cross-section view taken according to a plane alpha in [Fig.6] of a coring and pitting device seen by the arrows A-A in the operative position;
[Fig.9]

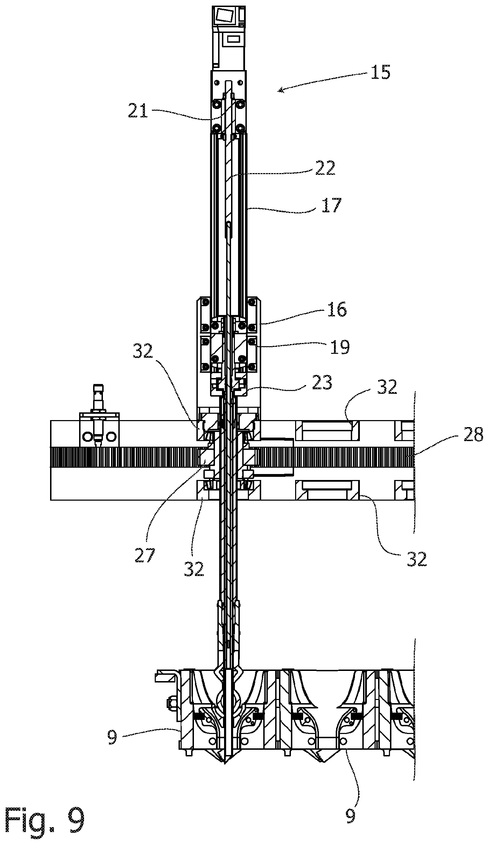

   [Fig.9] is a cross-section view taken along the lines B-B in [Fig.8];
[Fig. 10]

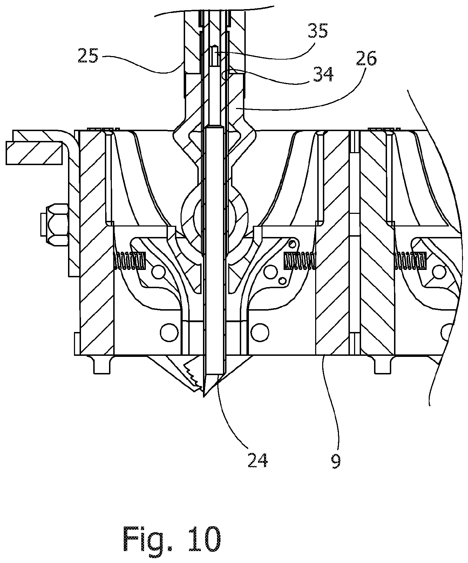

   [Fig. 10] is an enlarged detail in [Fig.9];
[Fig.11]

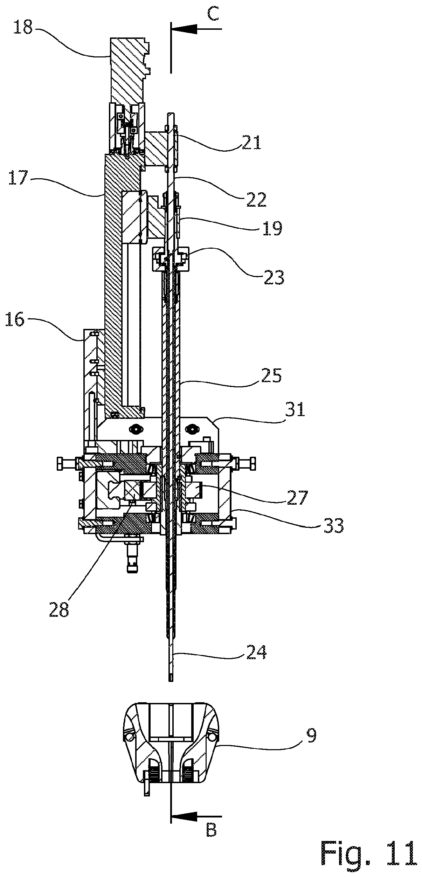

   [Fig.11] is a cross-section view taken according to the plane alpha in [Fig.6] of the coring and pitting device seen by the arrows A-A in the rest position;
[Fig.12]

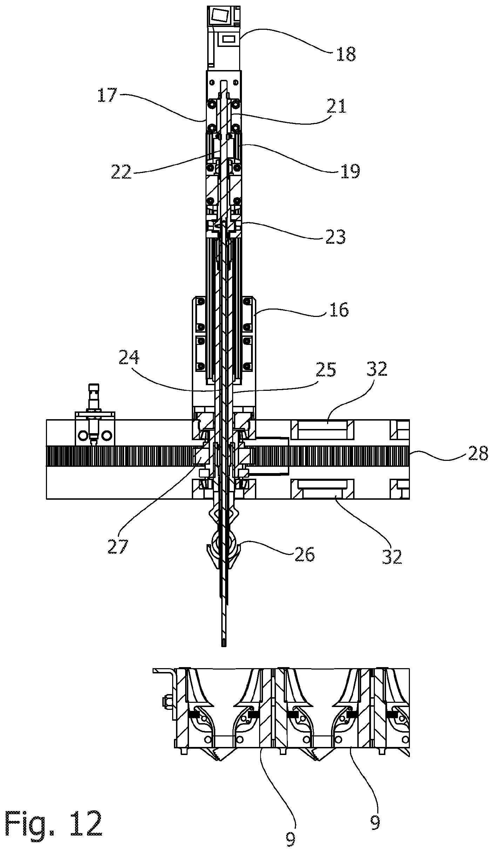

   [Fig.12] is a cross-section view taken along the lines C-C in [Fig.11];
[Fig. 13]

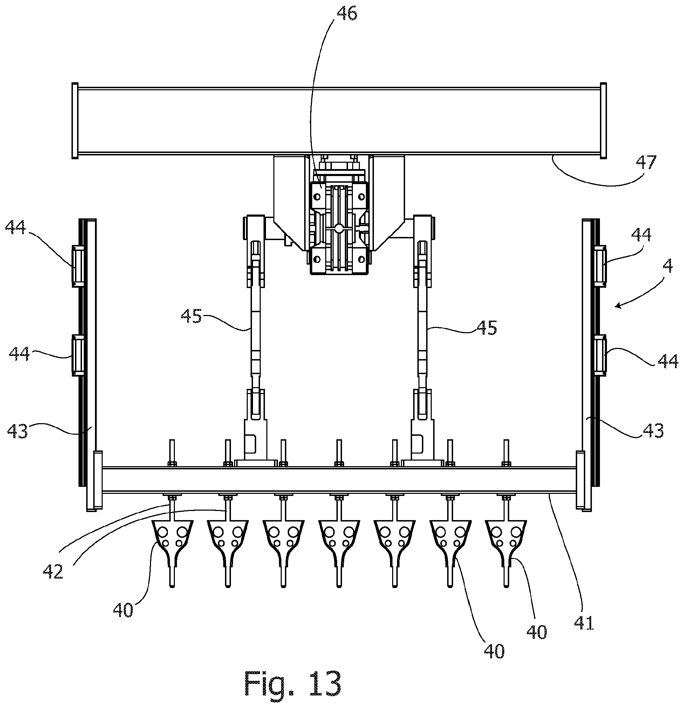

   [Fig.13] is a cross-section view of the halving substation of the cutting station in Figs. 1 to 3;
[Fig. 14]

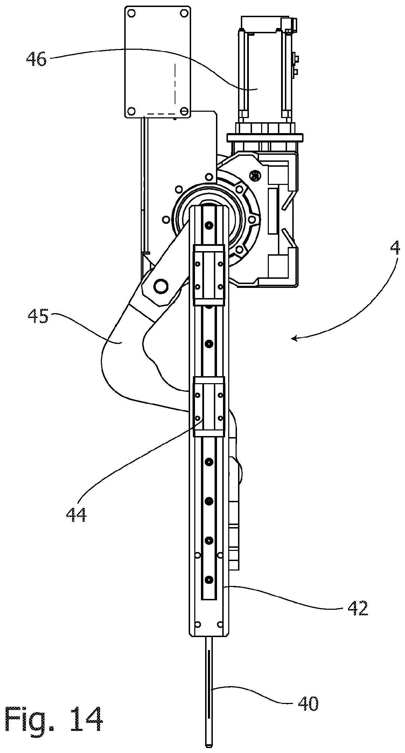

   [Fig.14] is a side view of the halving substation of the cutting station in [Fig.13];
[Fig. 15]

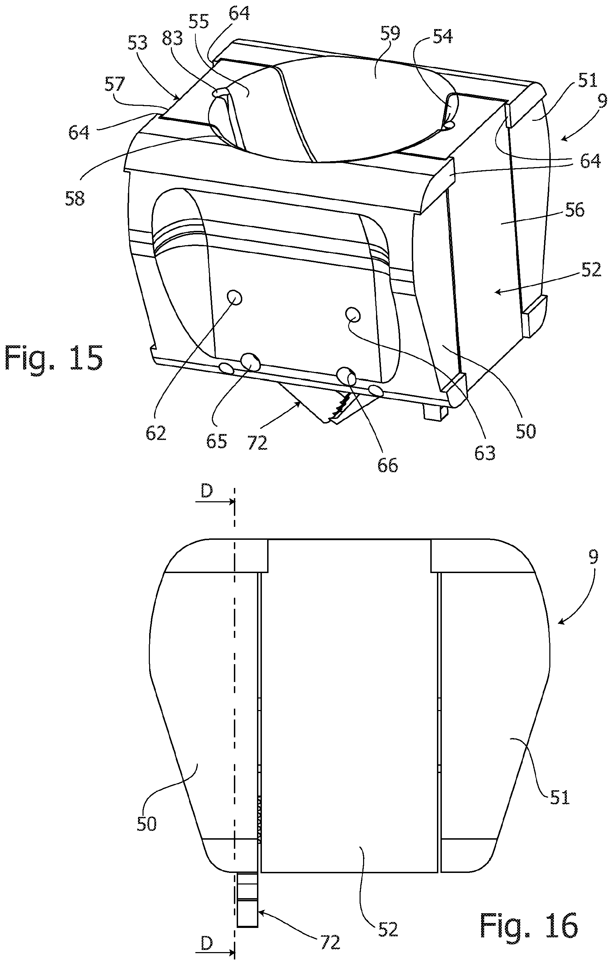

   [Fig.15] is a perspective view of a cup of the pear processing apparatus of the present invention in an open position, and on an enlarged scale;
[Fig. 16]
   [Fig.16] is a side view of the cup in [Fig.15];
[Fig. 17]

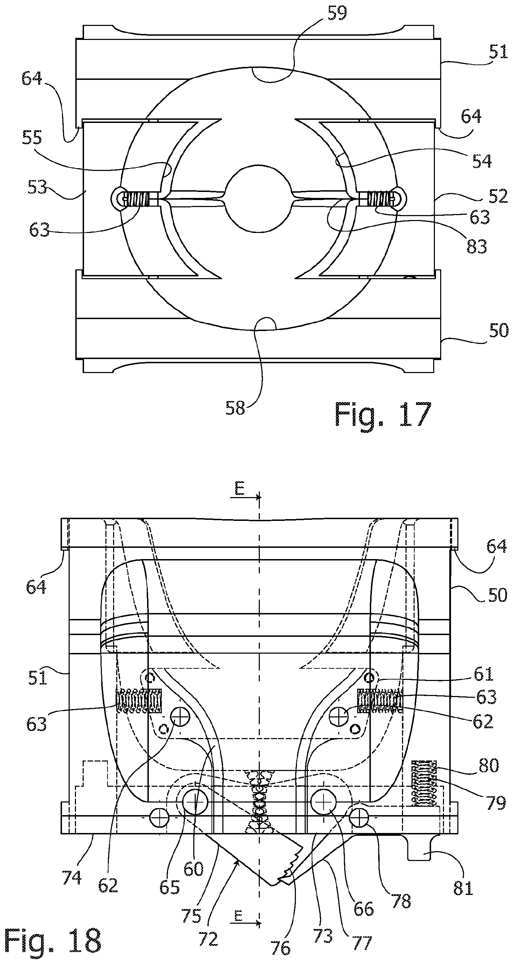

   [Fig.17] is a top plan view of the cup in [Fig.15];
[Fig. 18]
   [Fig.18] is a front view showing the internal cavities in hatching of the cup in [Fig.15];
[Fig. 19]

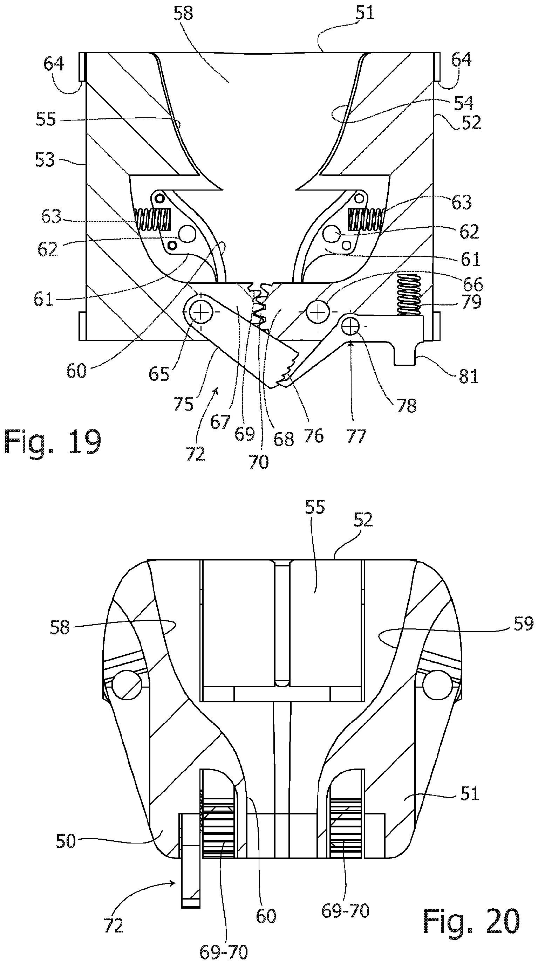

   [Fig.19] is an antero-posterior cross-section view along the lines D-D of the cup in [Fig.16];
[Fig.20]
   [Fig.20] is a transverse cross-section view obtained along the lines E-E in [Fig.18];
[Fig.21]

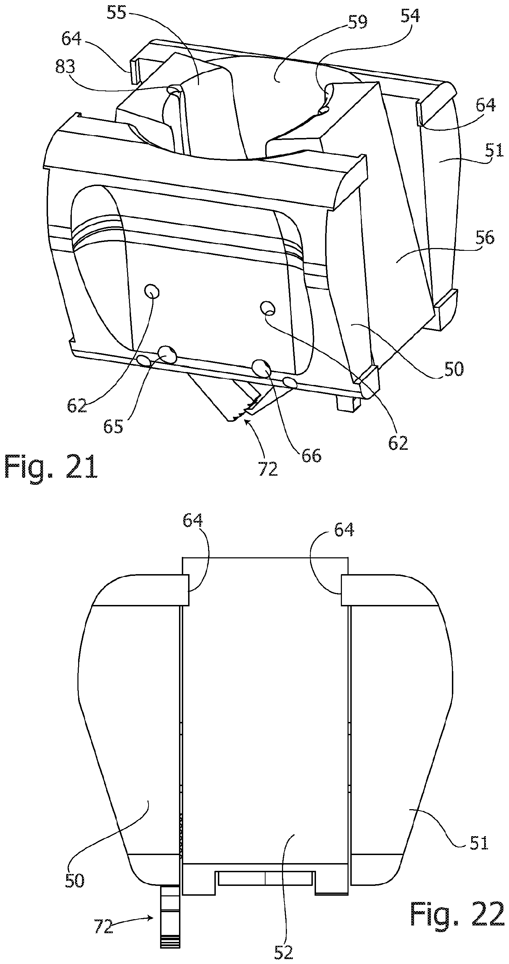

   [Fig.21] is a perspective view of a cup of the pear processing apparatus of the present invention in a clamping position of a pear, and on an enlarged scale;
[Fig.22]
   [Fig.22] is a side view of a cup in [Fig.21];
[Fig.23]

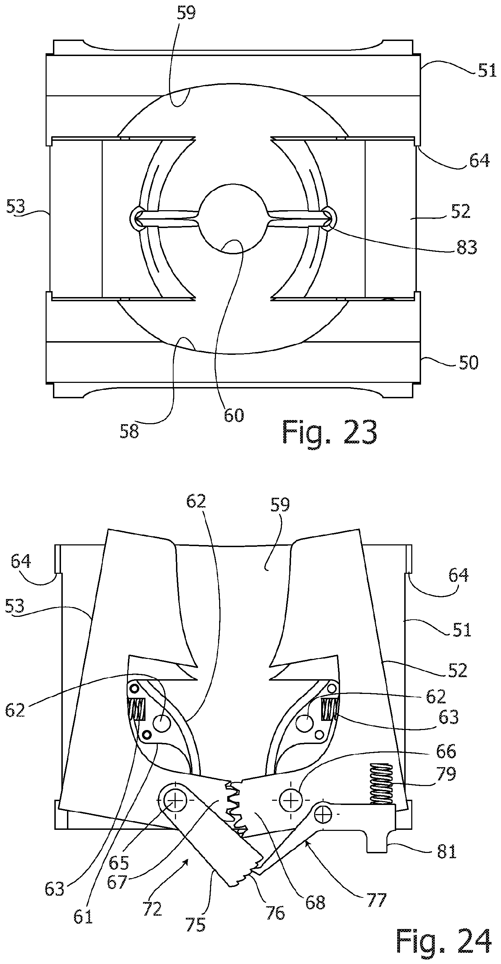

   [Fig.23] is a top plan view of the cup in [Fig.21]; and
[Fig.24]
   [Fig.24] is an antero-posterior cross-section view of the cup in [Fig.21].

### Description of an embodiment of the invention

Reference is made initially to Figs. 1 to 3, which show in a cross-section view a cutting station of the apparatus seen respectively from the forward side of the pears, and from the rear side, also in perspective. Other parts of the apparatus are described in PCT/IB2020/057305 entitled "Pear feeding method and apparatus for multi-lane processing" filed on 2 August 2020. It describes in particular the supply of pears to a feeder with translating shelves, the singularized passage of the pears in a plurality of chutes, the advancement of the pears with their peduncle downwards in a plurality of advancement channels, the holding of each single pear coming out of its feed channel in a respective receiving jaw, and the simultaneous cutting of the pear stems by means of a cutting device. Once the stems have been cut, the pears are subjected to coring and pitting and then halved according to the method of the present invention.

With reference to Figs. 1 to 3, the cutting station generally indicated as 1, comprises a measuring substation 2, according to the present invention, a coring and pitting substation 3 and a halving substation 4. The cutting station 1 is mounted on a frame 5. A conveyor 6 has a multilane belt 7 movable with a direction of advancement from a pear feeding station, not shown, towards the cutting station 1. The multilane belt 7 is formed by mesh elements and fruit holding flights 8 including a plurality of housing and centering cups 9 suitable for receiving respective pears (not shown) with the calycine end facing upwards. The housing and centering cups 9 will be described in detail below. A housing and centering cup 9, the first on the left in Figs. 1 and 2, is shown in a cross-section view.

In Figs. 4 and 5, which are a cross-section view taken from the forward side of the pears and a side view thereof, respectively, the measuring substation 2 is shown separated from the cutting station 1.

The measuring substation 2 includes a plurality of contactless distance meters 10. The contactless distance meters 10 are mounted by means of an adjustable support 11 to a horizontal support rod 12 fixed to the uprights 13 of the frame 5. The contactless distance meters 10 are equal in number to the rows of housing and centering cups 9 in each mesh element and fruit holding flight 8 of the multilane belt 7. The rows of housing and centering cups 9 are positioned below in turn in the advancement of the multilane belt 7, stopping during the measurement. The contactless distance meters 10 are preferably laser measurement sensors. As an example, the ZX1-LD model from Omron Corporation of Kyoto (Japan) can be taken. The meters 10 are electrically connected to a control unit 14.

The contactless distance meters 10 are oriented so as to read the center of each housing and centering cup 9. If a pear is positioned in the latter, the laser beam reaches the calycine end of the pear and communicates the distance read to the control unit 14. Knowing the calycine end of the pear allows to know the longitudinal dimension of the pear to be treated, since the distance of the contactless distance meters 10 from the multilane belt 7 of the conveyor 6, where the pear is positioned, is known. The position of the endocarp, or seed cell, can be determined in this way in each pear, since the endocarp in a pear is known to be at a constant distance from the calycine end, with the same longitudinal dimension of the pear. The endocarp position information is transmitted from the control unit to the coring and pitting substation 3 shown for representative clarity with only one coring and pitting device 15 in [Fig.6] which is a partial perspective view from the front and top of a coring and pitting substation of the cutting station.

Each coring and destoning device 15, unlike as shown schematically in [Fig.1], is mounted on an angular bracket 16 to the frame 5 of the apparatus. The device 15, as will be called for simplicity in the following, comprises an actuator 17 having a brushless motor 18 adapted to move a slide 19 on a prismatic guide 20. The brushless motor 18 is mounted at the free end of the prismatic guide 20 In proximity to the brushless motor 18, a sleeve 21 mounted about the prismatic guide 20 rigidly supports a guide rod 22. Slidably mounted on the guide rod 22 is a slide 19, to which a coring rod 24 and, coaxially thereto, a lobed shaft 25 carrying at its end a pitting knife 26 are fixed by means of a bush 23. It should be understood that, thanks to the arrangement described above, the coring rod 24 and the pitting knife 26 move together vertically. The lobed shaft 25 is coupled to a pinion bushing unit 27 in engagement with a rack 28. The rack 28 is mounted slidingly on a crosspiece 29 of the frame 5 and is moved at one end by a gearmotor 30 shown in enlarged scale in [Fig.7] externally to a portion 31 of the frame.

The pinion bushing unit 27 is supported by a perforated base 32 fixed orthogonally to the crosspiece 29. Even if not shown in [Fig.6] in the other perforated bases 32 there are as many devices 15, in the same number of housing and centering cups 9 present in each mesh element and fruit holding flight 8 of the multilane belt 7 of the conveyor 6. Thanks to this arrangement, the lobed shaft 25 can rotate around the coring rod 24 to carry out pitting.

According to the present invention, each pitting knife 26 is lowered together with its coring rod 24 in the height position of the pear endocarp. This displacement is controlled by the control unit 14 thanks to the measurement carried out by the respective contactless distance meters 10 in the measuring substation 2 on the pear located in the corresponding housing and centering cup 9. If the housing and centering cup 9 is empty, the contactless distance meters 10 communicates this information to the control unit 14 which will not give any displacement order to the brushless motor 18 of the coring and pitting device 15.

Reference is made now to Figs. 8 and 11 which are a cross-section view obtained according to a plane alpha in [Fig.6] of the coring and pitting device seen by the arrows A-A in the operating position and in the rest position, and to Figs. 9 and 12 which are a cross-section view obtained along the lines B-B in [Fig.8] and the lines C-C in [Fig.11], and also to [Fig.10] which is an enlarged detail in [Fig.9]. In the cross-sections view of Figs. 8 and 9 in which the pinion bushing unit 27 is closed in a housing 33, the engagement between the rack 28 and the pinion is shown. It is understood that the bushing coaxial to the pinion is mounted on axial bearings on the bases 32 for supporting the device. It can be noted that the bases 32 are provided on both sides with respect to the rack 28. The rotation of the lobed shaft 25 is performed simultaneously by the single gearmotor 30, whether the coring and pitting device 15 has lowered simultaneously with its brushless motor 18 the coring rod 24 together with the pitting knife 26, or it has not done so for lack of a pear in the relative centering and support cup 9.

[Fig.10] shows an enlargement of [Fig.9] where a housing and centering cup 9 is visible in section with the coring rod 24 inside and the pitting knife 26 coaxially to it. The housing and centering cup 9 will be described in greater detail later. It should be noted that the coring rod 24 slides inside a coaxial duct 34 formed by the lobed shaft 25. Near the lower end of the lobed shaft 25 there is a fixed spindle 35 inside the coaxial duct 34. The fixed spindle is not vertically movable.

The fixed spindle 35 serves to prevent the lifting of core residues inside the coaxial duct 34 by the coring rod 24 when the coring rod 24 and the pitting knife 26 are simultaneously moved upwards in the rest position.

In Figs. 11 and 12, as mentioned above, the coring and pitting device 15 is shown in section with the set of coring rod 24 and lobed shaft 25 of the pitting knife 26 moved to the rest position thanks to the lifting of the slide 19 by the brushless motor 18.

See now Figs. 13 and 14 which are a cross-section view of the halving substation of the cutting station of Figs. 1 to 3 and a side view of the halving substation of the cutting station in [Fig.13]. In the halving substation 4 halving blades generally indicated as 40 are mounted on a horizontal rod 41 by means of relative stems 42. The halving blades 40 have a front profile which, as will be seen below, is complementary to the cross-sectional profile of a cavity for the pear obtained in the housing and centering cup 9. The horizontal rod 41 is vertically movable on lateral guides 43 integral with the frame 5 of the apparatus by sliding with guides and recirculating ball slides generically designated as 44. The horizontal rod 41 is connected by means of a system of levers 45 to a second gearmotor 46, supported by a crosspiece 47 of the frame 5.

It must be understood that, in order to satisfactorily carry out the coring, pitting and halving operations, each pear must be adequately held inside its housing and centering cup 9.

Reference is made to Figs. 15 to 20, which are a perspective view, a side view, a top plan view, a front view showing the internal cavities in hatching, an enlargement of a detail in [Fig.12] or an antero-posterior cross-section, rear, and an enlargement of a detail of [Fig.11] or a cross-section view, respectively, of a cup of the pear processing apparatus of the present invention in the open position. Reference is also made to Figs. 21 to 24, which are a perspective view, a side view, a top plan view and a transversal antero-posterior cross-section view, respectively, of a cup of the pear processing apparatus of the present invention in a pear clamping position.

As previously said, the multilane belt 7 of the conveyor 6 is equipped with mesh elements and fruit holding flights 8. Each mesh element and fruit holding flight 8 includes a row of housing and centering cups 9. Each housing and centering cup 9 has a pair of fixed side walls 50, 51 arranged transversely to the direction of advance of the multilane belt 7 and a pair of jaw walls 52, 53 orthogonal to the fixed side walls 50, 51. The fixed side walls 50, 51 are connected together by means of pins indicated generically with 62. The jaw walls 52, 53 are substantially in the shape of a vane with concave facing surfaces 54, 55 to adapt to the profile of the pear, and opposite surfaces 56, 57. The jaw walls 52, 53 are preferably made of plastic, to be light and not to cause damage to the fruit that is held by them. The fixed side walls 50, 51 can also be conveniently made of plastic material. Like the concave facing surfaces 54, 55, the internal surfaces 58, 59 of the fixed side walls 50, 51, intended to come into contact with the pears, are also concave. With reference to [Fig.16], in the fixed front wall 50 of the housing and centering cup 9 there is shown, projecting downwards, a ratchet mechanism 72 which will be explained below.

As shown in the front view of [Fig.18] and in the cross-section view obtained in the direction transverse to the advancement of the multilane belt, shown in the open position in [Fig. 19] and in the clamping position in [Fig.24], the pins 62 which connect together the front and rear fixed walls 50, 51 of the housing and centering cup 9 serve to lock a funnel 60 between the same fixed walls 50, 51. The funnel 60 extends laterally in ribbed parts 61. As shown in [Fig.18], the profile of the funnel 60 is mated to the profile of a pear. In the ribbed parts 61 there is a pair of opposite seats for helical springs indicated generically with 63. The other end of the helical springs 63 is abutting against the respective jaw wall 52, 53.

On the ends of the front and rear fixed walls 50, 51 there are protrusions, indicated generically with 64, which act as an abutment for the jaw walls 52, 53.

[Fig. 19] shows a cross-section view taken along the line D-D in [Fig.16]. The jaw walls 52, 53 are hinged about a respective rotation pin 65, 66 passing through the front and rear fixed walls 50, 51. Each jaw wall 52, 53 has the gripping surface 54, 55 and a pair of projections 67, 68 equipped with toothed sectors 69, 70 mutually engaged, so that the two jaw walls 52, 53 are able to rotate in synchronism the one with respect to the other between an open position in the advancement towards the cutting station, and a clamping position in the cutting station, obtained as described below. In the cross-section view of [Fig.20], obtained with a cross-section obtained along the lines E-E in [Fig.18], the pairs of toothed sectors 69, 70, mutually engaged, of the jaw walls 52, 53 are shown.

The jaw walls 52, 53 are normally in the open position in which they abut against protrusions 64 of the fixed walls 50, 51. To pass into the closed or clamping position shown in Figs. 21 to 24, the jaw walls 52, 53 must be rotated towards each other about rotation pins 65, 66, which are mounted parallel to pins 62, 62 on the front and rear fixed walls 50, 51. To achieve this commanded rotation of the jaw walls 52, 53, on a plane 48 connected to the frame 5 of the apparatus, under the multilane belt 7 of the conveyor 6 there is mounted, for each housing and centering cup 9, a pair of pneumatic pistons indicated generically with 71 in Figs. 1 and 2. The pneumatic pistons 71 push on both jaw walls 52, 53 in their bases 73, 74 in an off-center position with respect to the rotation pins 65, 66. According to the present invention, this clamping position is maintained thanks to the ratchet mechanism 72, more clearly shown in Figs. 18, 19 and 24.

In proximity to the base 74 of the jaw wall 53, in correspondence with the rotation pin 65, an arm 75 is integral with the jaw 53 having a succession of teeth 76 at its free end. A hook 77 is hinged on the respective front wall 50 of the housing and centering cup 9 about a pivot 78. The hook 77 is spring loaded by means of a spring 79 housed in a seat 80 of the front wall 50; the hook 77 engages with the teeth 76 of the arm 75 of the jaw wall 53, so as to lock the jaw wall 53, with which the arm 75 is integral, in the open position as shown in Figs. 18 and 19, or in closed position as shown in [Fig.24]. It should be understood that the locking of the jaw wall 53 consequently entails the locking in the same position of the facing jaw 52 thanks to the pairs of toothed sectors 69, 70, mutually engaged, of the jaw walls 52, 53. The transition from the closed or clamping position to the open position is obtained by causing the rotation of the hook thanks to the upward thrust exerted on a protrusion 81 of the hook against the spring 79. This operation is performed by a pneumatic piston 82, also mounted on the plane 48 of the frame 5 of the apparatus, underneath the multilane belt 7 in correspondence with the halving substation 4, as shown in [Fig.3].

With reference to Figs. 15, 17 for the open position of the housing and centering cup 9 and to Figs. 21 and 23 for the clamping position of the same, it should be noted that on the concave surface 54, 55 of the jaw walls 52, 53 a groove 83 is made to receive the halving blade 40 in the halving substation 4. The groove 83 is shaped like the peripheral profile of the halving blade 40. Below in the concave surface of the walls 54, 55, as mentioned above, there is a seat where a helical spring 63, 63 abuts. The helical spring 63, 63, in its other end, abuts against the ribbed part 61 of the funnel 60. In this way, each jaw wall 52, 53 is loaded towards the open position even when it is in the clamping position locked by the ratchet mechanism 72 in the cutting station 1.

It should be understood that the ratchet mechanism 72 allows for the improvement of the prior art multilane belt conveyor because the housing and centering cups for the pears have the jaw walls actually closed against each other during the coring, pitting and halving operations to keep the pears effectively locked in the housing and centering cup. In this way, the coring stem will act exactly in correspondence with the stem - calyx axis of the pear, and the pitting knife will not cause the pear to rotate with consequent damage to the pitting.

The apparatus described above allows the method for processing pears according to the present invention to be carried out. Pears generally have a central axis of symmetry passing through the stem end and the calycine end. They have an endocarp located at a constant distance from the calycine end with the same longitudinal dimension of the pear. The pears, fed into a feeding station, advance into the apparatus controlled by the control unit 14 on the multilane belt 7 of the conveyor 6. The multilane belt 7 is formed by mesh elements and fruit holding flights 8, having the plurality of housing and centering cups 9 in each of which a pear is positioned with its calycine end facing upwards. On reaching the cutting station 1, the pear in a first advance step of the multilane belt 7 is blocked against rotation inside its housing and centering cup 9 by means of the jaw walls 52, 53 kept in the clamping position by the ratchet mechanism 72. The pear, being placed under the contactless distance meter 10, is measured by verifying the distance of the calycine end of the pear from the contactless distance meters 10. The longitudinal dimension of the pear is thus determined and, therefore, this information is transmitted to the control unit 14 which establishes the height position of the endocarp of the pear which is at that moment in the housing and centering cup 9.

In a second step of advancing the multilane belt, the pear is locked against rotation inside its housing and centering cup 9 by means of the jaw walls 52, 53, maintained in the clamping position by means of the ratchet mechanism 72, under the coring rod 24 and the pitting knife 26 in the rest position. The control unit 14 simultaneously lowers the coring stem 24 and the pitting knife 26 until reaching the height position of the endocarp of the underlying pear as calculated in the first advancement step of the multilane belt 7.

The coring rod 24 crosses the pear from the calycine end to the stem end, at the same time the pitting knife 26 moves to the height of the endocarp and is rotated simultaneously with the other pitting knives. Then, the coring rod 24 and the pitting knife 26 are raised. Any core residues are removed in a return stroke to the rest position.

In a third advancement step of the multilane belt 7, the housing and centering cups 9 of a fruit holding flight are in the halving substation. Here, the halving blades are lowered and the pears are halved. The pneumatic pistons 82, which are located in the halving substation, act on the protrusion 81 of the hooks 77, opening the ratchet. The jaw walls 52, 53 of the housing and centering cups 9 pass into the open position and the pears are overturned in the end rotation of the multilane belt 7 into a collecting vessel.

## Claims

1. A method for processing pears having an endocarp located at a distance from the calycine end depending on the pear longitudinal size, the pears advancing in an apparatus controlled by a control unit (14) on a multilane belt (7) comprising mesh elements and fruit holding flights (8) having a plurality of housing and centering cups (9) in each of which a pear is positioned with its calycine end facing upwards, in order to be cored, pitted and halved, the method comprising:
- in a first step of advancing the multilane belt (7), locking each pear against rotation inside its housing and centering cup (9), and measuring the distance of the calycine end to know the pear longitudinal size; and
- in a second step of advancing the multilane belt (7), simultaneously lowering, by the control unit (14), a coring rod (24) and a pitting knife (26) from a rest position to the height of the endocarp of the underlying pear, as determined by the control unit (14), each pitting knife (26) being rotated simultaneously with the other pitting knives (26) at different heights according to the longitudinal size of the pear to be pitted,
**characterized in that** the distance of the calycine end of each pear is measured without contact and communicated to the control unit (14) which determines the height position of the endocarp of that pear.

2. A multilane apparatus for processing pears, comprising on a frame (5) a control unit (14), a conveyor (6) and a cutting station (1) including a coring and pitting substation (3), that holds coring rods (24) and pitting knives (26), and a halving substation (4), that carries halving blades (40), the conveyor (6) having a multilane belt (7) movable with advancement direction towards the cutting station (1) and being formed by mesh elements and fruit holding flights (8) including a plurality of housing and centering cups (9) suitable for receiving respective pears with calycine end facing upwards, each housing and centering cup (9) being equipped with a front wall (50) and a rear wall (51) that are fixed and face each other transversely to the advancement direction of the multilane belt (7) and a pair of jaw walls (52, 53) hinged around a respective rotation pin (65, 66) held by the front wall (50) and rear wall (51), each jaw wall (52, 53) having a gripping surface and a pair of projections (67, 68) equipped with toothed sectors (69, 70) mutually engaged with the toothed sectors (69, 70) of the facing jaw wall, so that the two jaw walls (52, 53), equipped with bases (73, 74) are able to rotate in synchronism with each other between an open position in the forward movement towards the cutting station (1) and a clamping position in the cutting station (1),
**characterized in that** the cutting station (1) comprises, before the coring and pitting substation (3), a measuring substation (2), including a plurality of contactless distance meters (10) overlying the plurality of housing and centering cups (9) which are positioned in turn below in the advancement of the multilane belt (7), each contactless distance meter (10) being suitable for measuring its distance from the calycine end of the underlying pear and communicating it to the control unit (14) that determines the height position of the endocarp of that pear and controls the simultaneous lowering of a coring rod (24) and of a pitting knife (26) from its rest position to the height of the endocarp of the underlying pear, as determined by the control unit (14).

3. The apparatus according to claim 2, wherein the contactless distance meters (10) are laser measurement sensors.

4. The apparatus according to claim 2, wherein at least one jaw wall (52, 53) has on its side a ratchet mechanism (72) adapted to keep locked the jaw walls (52, 53) both in open position and in clamping position.

5. The apparatus according to claim 4, wherein the ratchet mechanism (72) comprises an arm (75) integral with the jaw wall (52, 53) provided with teeth (76) in its free end, and a hook (77) pivoted on the respective fixed wall (50, 51) of the housing and centering cup (9) and loaded by a spring (79) to engage with the teeth (76) of the arm (75) of the facing jaw wall (52, 53) so as to lock the jaw walls (52, 53) both in open position and in clamping position.

6. The apparatus according to claim 2, wherein the front wall (50) and rear wall (51) of the housing and centering cup (9) are mutually connected with a pair of pins (62, 62) passing through ribbed parts (61) of a funnel (60) located between the front wall (50) and rear wall (51) and shaped according to a profile conjugated to that of a halving blade (40), a helical spring (63) being abutted between a ribbed part (61) and the facing jaw wall (52, 53), so that each jaw wall (52, 53) is loaded towards the open position delimited by protrusions (64) at the ends of the front and rear fixed walls (50, 51).

7. The apparatus according to claim 6, wherein provided in the coring and pitting substation (3) on an underlying plane (48) connected to the frame (5) of the apparatus is, for each housing and centering cup (9), a pair of pneumatic pistons (71) adapted to push on the bases (73, 74) of both jaw walls (52, 53) in a decentralized position with respect to the rotation pins (65, 66) to bring the jaw walls (52, 53) to the clamping position by acting against the helical springs (63).

8. The apparatus according to claims 5 and 6, wherein provided in the halving substation (4) is a pneumatic piston (82) adapted to act on said hook (77) to bring each jaw wall (52, 53) in the open position with the help of said helical springs (63).

9. The apparatus according to claim 2, wherein in the coring and pitting substation (3), each coring rod (24) is coaxial to a lobed shaft (25) carrying a pitting knife (26), each lobed shaft (25) being pivotably mounted by means of its own pinion bushing unit (27) engaged, like the lobed shafts (25) carrying the other pitting knives (26), with a rack (28) driven back and forth by means of a first gearmotor (30).

10. The apparatus according to claim 9, wherein the coring rod (24) slides inside a coaxial duct (34) formed by the lobed shaft (25) in which is provided a fixed spindle (35) adapted to prevent the lifting of core residues inside the coaxial duct (34) by the coring rod (24) when the coring rod (24) and the pitting knife (26) are simultaneously moved upwards to the rest position.

11. The apparatus according to claim 2, wherein in the halving substation (4) the halving blades (40) are mounted on a horizontal rod (41), vertically movable on lateral guides (43) integral with the frame (1) of the apparatus by means of a second gearmotor (46) to which the horizontal rod (41) is connected with a system of levers (45).

## Patentansprüche

1. Verfahren zum Verarbeiten von Birnen, bei dem ein Endokarp in Abhängigkeit von der Birnenlänge in einem von dem Blütenkelchende entfernten Abstand angeordnet ist, wobei sich die Birnen in einer von einer Steuereinheit (14) gesteuerten Vorrichtung auf einem mehrspurigen Band (7) bewegen, welches Maschenelemente und Fruchthalteflügel (8) aufweist, die Fruchthalteflügel (8) weisen eine Vielzahl von Aufnahme- und Zentrierbechern (9) auf, in den Aufnahme- und Zentrierbechern (9) ist jeweils eine Birne mit dem Kelchende nach oben positioniert, um entkernt, entsteint und halbiert zu werden, das Verfahren umfasst:
- in einem ersten Schritt des Vorschiebens des mehrspurigen Bandes (7) wird jede Birne gegen Drehung in ihrem Aufnahme- und Zentrierbecher (9) gesichert und der Abstand des Kelchendes gemessen, um die Größe in Längsrichtung der Birne zu ermitteln; und
- in einem zweiten Schritt des Vorschiebens des mehrbahnigen Bandes (7), wobei gleichzeitig durch die Steuereinheit (14) ein Kernstab (24) und ein Entkernungsmesser (26) aus einer Ruhestellung auf die Höhe des Endokarps der darunterliegenden Birne, wie von der Steuereinheit (14) bestimmt, abgesenkt werden wobei jedes Entkernungsmesser (26) gleichzeitig mit den anderen Entkernungsmessern (26) in unterschiedlichen Höhen entsprechend der Größe in Längsrichtung der zu entsteinenden Birne gedreht wird, **dadurch gekennzeichnet, dass** der Abstand des Kelchendes jeder Birne berührungslos gemessen und an die Steuereinheit (14) übermittelt wird, die die Höhenposition des Endokarps dieser Birne bestimmt.

2. Mehrspurige Vorrichtung zum Verarbeiten von Birnen, umfassend auf einem Rahmen (5) angeordnet eine Steuereinheit (14), ein Förderband (6) und eine Schneidestation (1) mit einer Entkernungs- und Entsteinungsunterstation (3), die Kernstäbe (24) und Entkernungsmesser (26) aufnimmt, und einer Halbierungsunterstation (4), die Halbiermesser (40) trägt, wobei das Förderband (6) ein mehrspuriges Band (7) aufweist, das in Vorschubrichtung zur Schneidestation (1) verfahrbar ist und durch Maschenelemente und Fruchthalteflügel (8) mit mehreren Gehäuse- und Zentrierbechern (9), die zur Aufnahme entsprechender Birnen, deren Kelchenden nach oben zeigen, geeignet sind, wobei jeder Aufnahme- und Zentrierbecher (9) mit einer Vorderwand (50) und einer Rückwand (51) ausgestattet ist, die fest und quer zur Vorschubrichtung des mehrspurigen Bandes (7) zueinander ausgerichtet sind, und einem Paar Backenwände (52, 53), die um einen jeweiligen Drehstift (65, 66) schwenkbar gelagert sind, der von der Vorderwand (50) und der Rückwand (51) gehalten wird, wobei jede Backenwand (52, 53) eine Greiffläche und ein Paar Vorsprünge (67, 68) aufweist, die mit gezahnten Sektoren (69, 70) ausgestattet sind, die in gegenseitigem Eingriff mit den gezahnten Sektoren (69, 70) der gegenüberliegenden Backenwand stehen, so dass die beiden Backenwände (52, 53), ausgestattet mit Sockeln (73, 74), in der Lage sind, sich synchron miteinander zwischen einer offenen Position in der Vorwärtsbewegung zu der Schneidstation (1) und einer Spannstellung in der Schneidstation (1) zu drehen, **dadurch gekennzeichnet, dass** die Schneidstation (1) vor der Entkernungs- und Entkernungsstation (3) eine Messstation (2) umfasst, die eine Vielzahl von berührungslosen Entfernungsmessern (10) umfasst, die über der Vielzahl von Aufnahme- und Zentrierbechern (9) liegen, die wiederum unterhalb im Vorlauf des mehrspurigen Bandes (7) angeordnet sind, wobei jeder berührungslose Entfernungsmesser (10) geeignet ist, seinen Abstand von dem Kelchende der darunter liegenden Birne zu messen und ihn der Steuereinheit (14) mitzuteilen, die die Höhenposition des Endokarps dieser Birne bestimmt und das gleichzeitige Absenken von einen Kernstab (24) und eines Entkernungsmessers (26) aus ihrer Ruhestellung bis zur Höhe des Endokarps der darunterliegenden Birne, wie von der Steuereinheit (14) bestimmt.

3. Vorrichtung nach Anspruch 2, wobei die berührungslosen Entfernungsmesser (10) Lasermesssensoren sind.

4. Vorrichtung nach Anspruch 2, wobei mindestens eine Backenwand (52, 53) an ihrer Seite einen Ratschenmechanismus (72) aufweist, der dazu geeignet ist, die Backenwände (52, 53) sowohl in geöffneter Stellung als auch in Klemmstellung verriegelt zu halten.

5. Vorrichtung nach Anspruch 4, wobei der Ratschenmechanismus (72) einen Arm (75) umfasst, der mit der Backenwand (52, 53) verbunden ist und an seinem freien Ende mit Zähnen (76) versehen ist, und einen Haken (77), der an der jeweiligen festen Wand (50, 51) des Aufnahme- und Zentrierbechers (9) schwenkbar ist und durch eine Feder (79) belastet wird, um mit den Zähnen (76) des Armes (75) der gegenüberliegenden Backenwand (52, 53) einzugreifen, um die Backenwände (52, 53) sowohl in geöffneter Stellung als auch in Klemmstellung zu verriegeln.

6. Vorrichtung nach Anspruch 2, wobei die Vorderwand (50) und die Rückwand (51) des Aufnahme- und Zentrierbechers (9) miteinander verbunden sind mit einem Paar Stifte (62, 62), die durch gerippte Teile (61) eines Trichters (60) verlaufen, der sich zwischen der Vorderwand (50) und der Rückwand (51) befindet und gemäß einem Profil geformt ist, das dem einer Halbierklinge (40) entspricht, wobei eine Schraubenfeder (63) zwischen einem gerippten Teil (61) und der gegenüberliegenden Backenwand (52, 53) anliegt, so dass jede Backenwand (52, 53) in Richtung der offenen Stellung belastet wird, die durch Vorsprünge (64)an den Enden der vorderen und hinteren festen Wände (50, 51) begrenzt ist.

7. Vorrichtung nach Anspruch 6, wobei in der Entkernungs- und Entsteinungsunterstation (3) auf einer darunterliegenden Ebene (48), die mit dem Rahmen (5) der Vorrichtung verbunden ist, für jeden Aufnahme- und Zentrierbecher (9) ein Paar pneumatischer Kolben (71) vorgesehen ist, die dazu ausgebildet sind, auf die Sockel (73, 74) beider Backenwände (52, 53) in einer dezentralen Position in Bezug auf die Drehstifte (65, 66) zu drücken, um die Backenwände (52, 53) durch Einwirken gegen die Schraubenfedern (63) in die Klemmposition zu bringen.

8. Vorrichtung nach den Ansprüchen 5 und 6, wobei in der Halbierungsunterstation (4) ein pneumatischer Kolben (82) vorgesehen ist, der dazu ausgebildet ist, auf den Haken (77) zu wirken, um jede Backenwand (52, 53) mit Hilfe der Schraubenfedern (63) in die geöffnete Position zu bringen.

9. Vorrichtung nach Anspruch 2, wobei in der Entkernungs- und Entsteinungsunterstation (3) jeder Kernstab (24) koaxial zu einem gelappten Schaft (25) verläuft, der ein Entkernungsmesser (26) trägt, wobei jeder gelappte Schaft (25) mittels einer eigenen Ritzelbuchseneinheit (27) schwenkbar gelagert ist, ebenso wie die gelappten Schäfte (25), die die anderen Entkernungsmesser (26) tragen, und mit einer Zahnstange (28) in Eingriff steht, die mittels eines ersten Getriebemotors (30) hin und her gefahren wird.

10. Vorrichtung nach Anspruch 9, wobei der Kernstab (24) in einen Koaxialkanal (34) gleitet, der durch den gelappten Schaft (25) gebildet wird, in dem eine feste Spindel (35) vorgesehen ist, die so ausgelegt ist, dass das Anheben von Kernrückständen innerhalb des Koaxialkanals (34) durch den Kernstab (24) verhindert wird, wenn der Kernstab (24) und das Entkernungsmesser (26) gleichzeitig nach oben in die Ruhestellung bewegt werden.

11. Vorrichtung nach Anspruch 2, wobei in der Halbierungsunterstation (4) die Halbiermesser (40) auf einer horizontalen Stange (41) montiert sind, die mittels eines zweiten Getriebemotors (46) vertikal auf seitlichen Führungen (43) beweglich ist, die seitlichen Führungen (43) fest mit dem Rahmen (1) der Vorrichtung verbunden sind und die horizontale Stange (41) über ein System von Hebeln (45) mit dem zweiten Getriebemotor (46) verbunden ist.

## Revendications

1. Procédé pour traiter des poires ayant un endocarpe situé à une distance de l'extrémité conique en fonction de la taille longitudinale de la poire, les poires avançant dans un appareil commandé par une unité de contrôle (14) sur une courroie à plusieurs voies (7) comprenant des éléments de maille et des plaques porte-fruit (8) ayant une pluralité de coupelles de logement et de centrage (9) dans chacune desquelles une poire est positionnée avec son extrémité conique orientée vers le haut, afin d'être évidée, dénoyautée et coupée en deux, le procédé comprenant :
- dans une première étape d'avancement de la courroie à plusieurs voies (7), le blocage de chaque poire contre la rotation à l'intérieur de sa coupelle de logement et de centrage (9), et la mesure de la distance de l'extrémité conique pour connaître la taille longitudinale de la poire ; et
- dans une deuxième étape d'avancement de la courroie à plusieurs voies (7), l'abaissement simultané, par l'unité de contrôle (14), d'une tige d'évidement (24) et d'un couteau dénoyauteur (26) d'une position de repos à la hauteur de l'endocarpe de la poire sous-jacente, comme déterminé par l'unité de contrôle (14), chaque couteau dénoyauteur (26) étant entraîné en rotation simultanément avec les autres couteaux dénoyauteurs (26) à des hauteurs différentes selon la taille longitudinale de la poire à dénoyauter,
**caractérisé en ce que** la distance de l'extrémité conique de chaque poire est mesurée sans contact et communiquée à l'unité de contrôle (14) qui détermine la position de hauteur de l'endocarpe de cette poire.

2. Appareil à plusieurs voies pour traiter des poires, comprenant sur un châssis (5), une unité de contrôle (14), un transporteur (6) et une station de coupe (1) comprenant une sous-station d'évidement et de dénoyautage (3), qui maintient les tiges d'évidement (24) et les couteaux dénoyauteurs (26) et une sous-station de découpage en deux (4), qui porte des lames de découpage en deux (40), le transporteur (6) ayant une courroie à plusieurs voies (7) mobile avec la direction d'avancement vers la station de coupe (1) et étant formée par des éléments de maille et des plaques porte-fruit (8) comprenant une pluralité de coupelles de logement et de centrage (9) appropriées pour recevoir les poires respectives avec l'extrémité conique orientée vers le haut, chaque coupelle de logement et de centrage (9) étant équipée avec une paroi avant (50) et une paroi arrière (51) qui sont fixées et se font face, de manière transversale, par rapport à la direction d'avancement de la courroie à plusieurs voies (7) et une paire de parois à mâchoire (52, 53) articulées autour d'une broche de rotation (65, 66) respective maintenue par la paroi avant (50) et la paroi arrière (51), chaque paroi à mâchoire (52, 53) ayant une surface de préhension et une paire de saillies (67, 68) équipées de secteurs dentés (69, 70) mutuellement mis en prise avec les secteurs dentés (69, 70) de la paroi à mâchoire en vis-à-vis, de sorte que les deux parois à mâchoire (52, 53), équipées de bases (73, 74), peuvent tourner en synchronisation entre elles entre une position ouverte lors du mouvement vers l'avant, vers la station de coupe (1) et une position de serrage dans la station de coupe (1),
**caractérisé en ce que** la station de coupe (1) comprend, avant la sous-station d'évidement et de dénoyautage (3), une sous-station de mesure (2), comprenant une pluralité de dispositifs de mesure de distance sans contact (10) recouvrant la pluralité de coupelles de logement et de centrage (9) qui sont positionnées à leur tour au-dessous lors de l'avancement de la courroie à plusieurs voies (7), chaque dispositif de mesure de distance sans contact (10) étant approprié pour mesurer la distance de l'extrémité conique de la poire sous-jacente et la communiquer à l'unité de contrôle (14) qui détermine la position de hauteur de l'endocarpe de cette poire et commande l'abaissement simultané d'une tige d'évidement (24) et d'un couteau dénoyauteur (26) de sa position de repos à la hauteur de l'endocarpe de la poire sous-jacente, comme déterminé par l'unité de contrôle (14).

3. Appareil selon la revendication 2, dans lequel les dispositifs de mesure de distance sans contact (10) sont des capteurs de mesure laser.

4. Appareil selon la revendication 2, dans lequel au moins une paroi à mâchoire (52, 53) a, sur son côté, un mécanisme à cliquet (72) adapté pour maintenir bloquées les parois à mâchoire (52, 53) à la fois en position ouverte et en position de serrage.

5. Appareil selon la revendication 4, dans lequel le mécanisme à cliquet (72) comprend un bras (75) solidaire avec la paroi à mâchoire (52, 53) dotée de dents (76) dans son extrémité libre, et un crochet (77) pivoté sur la paroi fixe (50, 51) respective de la coupelle de logement et de centrage (9) et chargé par un ressort (79) pour se mettre en prise avec les dents (76) du bras (75) de la paroi à mâchoire (52, 53) en vis-à-vis afin de bloquer les parois à mâchoire (52, 53) à la fois en position ouverte et en position de serrage.

6. Appareil selon la revendication 2, dans lequel la paroi avant (50) et la paroi arrière (51) de la coupelle de logement et de centrage (9) sont mutuellement raccordées avec une paire de broches (62, 62) traversant des parties nervurées (61) d'un entonnoir (60) situé entre la paroi avant (50) et la paroi arrière (51) et formées selon un profil conjugué à celui d'une lame de découpage en deux (40), un ressort hélicoïdal (63) venant en butée entre une partie nervurée (61) et la paroi à mâchoire (52, 53) en vis-à-vis, de sorte que chaque paroi à mâchoire (52, 53) est chargée vers la position ouverte délimitée par des saillies (64) au niveau des extrémités des parois fixes avant et arrière (50, 51).

7. Appareil selon la revendication 6, dans lequel, prévue dans la sous-station d'évidement et de dénoyautage (3) sur un plan sous-jacent (48) raccordé au châssis (5) de l'appareil, on trouve, pour chaque coupelle de logement et de centrage (9), une paire de pistons pneumatiques (71) adaptés pour pousser sur les bases (73, 74) des deux parois à mâchoire (52, 53) dans une position décentralisée par rapport aux broches de rotation (65, 66) pour amener les parois à mâchoire (52, 53) dans la position de serrage en agissant contre les ressorts hélicoïdaux (63).

8. Appareil selon les revendications 5 et 6, dans lequel, prévu dans la sous-station de découpage en deux (4), on trouve un piston pneumatique (82) adapté pour agir sur ledit crochet (77) afin d'amener chaque paroi à mâchoire (52, 53) dans la position ouverte à l'aide desdits ressorts hélicoïdaux (63).

9. Appareil selon la revendication 2, dans lequel, dans la sous-station d'évidement et de dénoyautage (3), chaque tige d'évidement (24) est coaxiale par rapport à un arbre à lobe (25) portant un couteau dénoyauteur (26), chaque arbre à lobe (25) étant monté, de manière pivotante, au moyen de sa propre unité de bague à pignon (27) mise en prise, comme les arbres à lobe (25) portant les autres couteaux dénoyauteurs (26), avec une crémaillère (28) entraînée en avant et en arrière au moyen d'un premier motoréducteur (30).

10. Appareil selon la revendication 9, dans lequel la tige d'évidement (24) coulisse à l'intérieur d'un conduit coaxial (34) formé par l'arbre à lobe (25) dans lequel on prévoit une broche fixe (35) adaptée pour empêcher le levage des résidus d'évidement à l'intérieur du conduit coaxial (34) par la tige d'évidement (24), lorsque la tige d'évidement (24) et le couteau dénoyauteur (26) sont déplacés simultanément vers le haut dans la position de repos.

11. Appareil selon la revendication 2, dans lequel, dans la sous-station de découpage en deux (4), les lames de découpage en deux (40) sont montées sur une tige horizontale (41), verticalement mobiles sur des guides latéraux (43) solidaires avec le châssis (1) de l'appareil au moyen d'un deuxième motoréducteur (46) auquel la tige horizontale (41) est raccordée avec un système de leviers (45).
